# EUROPEAN PATENT APPLICATION

(11) **EP 4 129 950 A1**
(43) Date of publication of application: **08.02.2023**
(21) Application number: 22397505.3
(22) Date of filing: 01.08.2022
(51) Int. Cl.: C04B 28/04, C04B 40/00

(54) **CONCRETE COMPOSITION**

(30) Priority: 02.08.2021 FI 20215830
(71) Applicant: Parma OY, 03100 Nummela (FI)
(72) Inventor: SKYTTÄ, Olli, 03100 Nummela (FI); KYLMÄMETSÄ, Harri, 03100 Nummela (FI); RISTOLA, Pekko, 03100 Nummela (FI); JÄRVI, Kalle, 03100 Nummela (FI); LIIMATAINEN, Janne, 03100 Nummela (FI)
(74) Representative: Laine IP Oy

(57) **Abstract**

According to an example aspect of the present invention, there is provided a concrete composition comprising furnace slag, stone aggregate, an additive, Portland cement, and an activator, wherein the amount of furnace slag is 2 - 15 % by weight of the dry matter of the composition. According to another aspect of the present invention, there is provided a method for manufacturing a concrete element utilising the provided concrete composition.

## Description

### FIELD

The invention relates to the field of concrete compositions. Particularly, the invention concerns an environmentally friendly concrete composition and the method for manufacturing a concrete element using said concrete composition.

### BACKGROUND

It is generally known that the manufacturing concrete elements is not generally an environmentally friendly process. Especially, the calcination process for producing one of the main ingredients of concrete, cement, emits a lot of CO₂ and energy (heat).

Normally concrete elements are produced by using Portland-cement. However, use of Portland cement is problematic because it is manufactured by sintering raw materials, primary limestone, at 1450 °C. For each ton of ordinary Portland cement, approximately 800 kg of greenhouse gas is emitted into the atmosphere. This greenhouse gas is due to the fuel composition when heating the raw materials to high temperatures as well as to chemical reactions that take place during this heating e.g. decarbonation of limestone.

To make a good concrete element product the materials in the concrete must bind which each other, but the element must not shrink during curing.

Aims to produce environmentally friendly concrete compounds has been studied before. For example, WO 2008048617 discloses a high strength, corrosion resistant concrete composition having low greenhouse gas emissions by using geopolymer-based concrete compounds and a slag-based concrete compound. The geopolymer component includes a relatively large amount of amorphous silica and is mixed with an aggregate compound such as granite, limestone or sand. The manufacturing process of geopolymer based concrete compounds uses alkali activation of amorphous silica and minimizes the need for lime and thus is an environmentally friendly process. The slag based concrete compound comprises slag and aggregate including limestone, granite and sand. It can also contain an activator like waterglass and natron for raising the pH of the compound. The invention reduces the use of Portland cement and CO₂ emission. In this invention limestone is used only as an aggregate.

Also, EP patent 2514727 discloses producing environmentally friendly concrete compounds by totally or partly replacing cement, fly ash and blast furnace slag with materials that are environmentally friendlier compounds. It uses an alkali activation process and uses fine limestone or a combination of limestone and metacaolin or blast furnace slag as a binder.

The aim of the current invention is to produce environmentally friendly concrete elements by replacing at least some of the high emission compounds in concrete elements.

### SUMMARY OF THE INVENTION

The invention is defined by the features of the independent claims. Some specific embodiments are defined in the dependent claims.

According to a first aspect of the present invention, there is provided a concrete composition comprising: furnace slag; stone aggregate; an additive; and Portland cement, wherein the amount of furnace slag is 2 - 15 % by weight of the dry matter of the composition.

According to a second aspect of the present invention, there is provided a method for making concrete element comprising: providing a concrete composition; mixing the composition to provide a mixture; placing the formed mixture into a mould; heating the mould at a heating temperature; and monitoring the curing of the concrete element.

Traditional Portland-cement is replaced with a less carbon dioxide -intensive material or by-products to reduce the emissions of the concrete element. This new process allows the use of normally less active materials without decreasing the efficiency of the process.

Advantages are that the manufactured concrete is environmentally friendlier, meaning that the used materials are less CO₂-intensive. This can be done by utilizing industrial by-products, such as blast furnace slag, in the manufacturing process.

### EMBODIMENTS

### DEFINITIONS

In the present context, the term "precipitated calcium carbonate slurry" comprises a mixture of precipitated calcium carbonate (PCC) particles and water. The PCC particles have an average particle size such as 40 - 120 nm, preferably 40 - 90 nm, for example 75 - 85 nm. The amount of PCC particles in the slurry is 20 - 40, preferably 25 - 35 wt-%, for example 30 wt-% of the weight of the mixture.

According to one embodiment there is provided a concrete composition comprising: furnace slag; stone aggregate; an additive; Portland cement; and an activator selected from precipitated calcium carbonate and process slurry, wherein the amount of furnace slag is 2 - 15 % by weight of the dry matter of the composition. By using this amount of furnace slag it is found that the CO₂-footprint of the concrete is reduced by up to 40% compared to conventional concrete.

The composition further comprises an activator. The activator can be precipitated calcium carbonate (PCC) slurry, wherein the amount of PCC slurry is 0.2 - 1, preferably 0.3 - 0.9, for example 0.4 - 0.8 % by weight of the dry matter of the composition. The PCC is nano- or microsized and provides nucleation centres for the surface reactions that bring strength to the element. The PCC is dispersed into water to form a suspension. It acts as an accelerating activation agent.

According to another embodiment the activator is process slurry. The amount of process slurry is 1 - 5, preferably 2 - 4, for example 2 - 3 % by weight of the dry matter of the composition. The process slurry is fine particles suspended in water which is obtained from the process of manufacturing concrete elements. The process slurry is mainly hydrated cement.

According to an embodiment of the invention the additive in the concrete composition is a plastisizer or a water reducer, preferably polycarboxylate ether.

According to an embodiment of the current invention the amount of furnace slag in the concrete composition is 2 - 12, preferably 4 - 11, for example 7 - 10 % by weight of the dry matter of the composition.

According to an embodiment of the current invention the amount of Portland cement is 2 - 9, preferably 3 - 8, for example 4 - 7 % by weight of the dry matter of the composition. The cement has an optimized particle size distribution which allows the efficient activation of the binding agents replacing part of the cement.

According to an embodiment of the current invention the amount of stone aggregate is 65 - 95, preferably 70 - 90, for example 75 - 85 % by weight of the dry matter of the composition.

According to an embodiment of the current invention the amount of the activator is 0.05 - 1, preferably 0.06 - 0.7, for example 0.07 - 0.5 % by weight of the dry matter of the composition.

According an embodiment of the current invention metakaolin can be used in the concrete composition as binding agent. The metakaolin may be activated. Concrete slurry is recycled and connected to the activation of the metakaolin.

According to an embodiment of the current invention there is provided a method for making a concrete element. The method comprises the steps of providing the concrete composition according to one of the above embodiments, mixing the composition to provide a mixture, placing the mixture into a mould, heating the mould at a heating temperature and monitoring the curing of the concrete element. The element maybe precast or casted in-situ directly on the building site.

The furnace slag included in the concrete composition is not part of the cement. The furnace slag is added from another source at the factory site. Preferably, the furnace slag used in the current invention is a by-product of another process.

According to an embodiment of the current invention the concrete element has a target strength of 30 - 80 MPa, preferably 35 - 75 MPa, for example 40 - 70 MPa.

According to an embodiment of the current invention the concrete element has a compressive strength of over 15 MPa, preferably over 30 MPa, for example over 34 MPa when dried at heating temperature for 15 hours.

According to an embodiment of the current invention the heating temperature is 20 - 60 °C, preferably 30 - 55 °C, for example 35 - 50 °C.

### EXAMPLES

The concrete composition will now be illustrated with reference to the following examples. These examples are provided for illustration only and should not be considered limiting the invention.

### Example 1

165 kg/m³ of cement, 200 kg/m³ of furnace slag, 1922 kg/m³ of stone aggregates having a maximum aggregate size of 16 mm, 135 kg/m³ of water and 2,4 kg/m³ of polycarboxylate ether were mixed. After curing in a 100 mm diameter cylinder at room temperature for 15 hours the compression strength was 34 MPa and at a temperature of 43 °C for 17 hours the compression strength was 39 MPa.

### Example 2

165 kg/m³ of cement, 200 kg/m³ of furnace slag, 1958 kg/m³ of stone aggregates having a maximum aggregate size of 16 mm, 20 kg/m³ of PCC slurry, 122 kg/m³ of water and 2,4 kg/m³ of polycarboxylate ether were mixed. After curing in a 100 mm diameter cylinder at room temperature for 15 hours the compression strength was 36 MPa and at a temperature of 43 °C for 17 hours the compression strength was 40 MPa.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

The concrete elements provided by the current invention can be used in the construction industry. More precisely, the concrete composition can be used to manufacture precast and in situ casted concrete members such as hollow core slabs, walls, beams, columns or other type of slabs as ribbed slabs, floor blanks and massive slabs or other type of massive concrete elements. All these members are based on plain concrete, reinforced concrete, pre-stressed concrete or post tensioned concrete.

### ACRONYMS LIST

PCC Precipitated calcium carbonate

### CITATION LIST

### Patent Literature

WO 2008048617
EP 2514727

## Claims

1. A concrete composition comprising:
- furnace slag;
- stone aggregate;
- an additive;
- Portland cement; and
- an activator selected from precipitated calcium carbonate and process slurry;
wherein the amount of furnace slag is 2 - 15 % by weight of the dry matter of the composition.

2. The composition according to claim 1, wherein the activator is precipitated calcium carbonate and wherein the amount of precipitated calcium carbonate slurry is 0.2 - 1, preferably 0.3 - 0.9, for example 0.4 - 0.8 % by weight of the dry matter of the composition.

3. The composition according to claim 1, wherein the activator is process slurry and wherein the amount of process slurry is 1 - 5, preferably 2 - 4, for example 2 - 3 % by weight of the dry matter of the composition.

4. The composition according to any of the preceding claims, wherein the additive is a plastisizer or a water reducer, preferably polycarboxylate ether.

5. The composition according to claim according to any of the preceding claims, wherein the amount of furnace slag is 2 - 12, preferably 4 - 11, for example 7 - 10 % by weight of the dry matter of the composition.

6. The composition according to any of the preceding claims, wherein the amount of cement is 2 - 9, preferably 3 - 8, for example 4 - 7 % by weight of the dry matter of the composition.

7. The composition according to any of the preceding claims, wherein the amount of stone aggregate is 65 - 95, preferably 70 - 90, for example 75 - 85 % by weight of the dry matter of the composition.

8. The composition according to any of the preceding claims, wherein the amount of the activator is 0.05 - 1, preferably 0.06 - 0.7, for example 0.07 - 0.5 % by weight of the dry matter of the composition.

9. A concrete composition comprising 165 kg/m³ of Portland cement, 200 kg/m³ of furnace slag, 1958 kg/m³ of stone aggregates having a maximum aggregate size of 16 mm, 20 kg/m³ of precipitated calcium carbonate slurry, 122 kg/m³ of water and 2,4 kg/m³ of polycarboxylate ether.

10. A method for making concrete element comprising:
- providing a concrete composition according to any of claims 1 - 9;
- mixing the composition to provide a mixture;
- placing the formed mixture into a mould;
- heating the mould at a heating temperature; and
- monitoring the curing of the concrete element.

11. The method according to claim 10, wherein the concrete element has a target strength of 30 - 80 MPa, preferably 35 - 75 MPa, for example 40 - 70 MPa.

12. The method according to claim 10 or 11, wherein the concrete element has a compressive strength of over 15 MPa, preferably over 30 MPa, for example over 34 MPa when dried at heating temperature for 15 hours.

13. The method according to any of claims 10 - 12, wherein the heating temperature is 20 - 60 °C, preferably 30 - 55 °C, for example 35 - 50 °C.
